# EUROPÄISCHE PATENTSCHRIFT

(11) **EP 0 527 148 B1**
(45) Veröffentlichungstag und Bekanntmachung des Hinweises auf die Patenterteilung: **30.11.1994**
(21) Anmeldenummer: 91907777.6
(22) Anmeldetag: 05.04.1991
(51) Int. Cl.: C02F 1/62, C02F 1/52

(54) **ZUSAMMENSETZUNG ZUM BEHANDELN VON MIT METALLIONEN VERUNREINIGTEM WASSER, VERFAHREN ZU IHRER HERSTELLUNG UND IHRE VERWENDUNG**
COMPOSITION FOR TREATING WATER CONTAMINATED WITH METALLIC IONS, PROCESS FOR PRODUCING THE SAME AND ITS USE
COMPOSITION DE TRAITEMENT D'EAU CONTAMINEE AVEC DES IONS METALLIQUES, SON PROCEDE DE PRODUCTION ET SON UTILISATION

(30) Priorität: 30.04.1990 DE 4013974
(43) Veröffentlichungstag der Anmeldung: 17.02.1993
(73) Patentinhaber: Straten, Günter, D-52074 Aachen (DE)
(72) Erfinder: Straten, Günter, D-52074 Aachen (DE)
(74) Vertreter: Kurig, Thomas, Dipl.-Phys.
(86) Internationale Anmeldenummer: DE9100298
(87) Internationale Veröffentlichungsnummer: WO9117121

(56) Entgegenhaltungen:
- DE-U- 9 007 301
- FR-A- 2 171 345
- Patent Abstracts of Japan, Band 9, Nr. 254 (308) (1977), 11. Okt. 1985 & JP,A, 60106585 (MIYOSHI YUSHI K.K.), 12. Juni 1985
- Patent Abstracts of Japan, Band 7, Nr. 56 (155) (1201), 8. März 1983 & JP,A, 57204289 (SHOWA DENKO K.K.), 14. Dezember 1982
- Patent Abstracts of Japan, Band 12, Nr. 143 (492)(2990), 30. April 1988 & JP,A, 62258788 (KING SHOKUHIN K.K.) 11. November 1987

## Beschreibung

Die Erfindung betrifft eine Zusammensetzung zum Behandeln von Metallionen und gegebenenfalls zusätzlich organische und/oder anorganische Verunreinigungen enthaltendem Wasser, sowie ein Verfahren zu ihrer Herstellung und deren Verwendung bei der Abtrennung von Schwer- und Buntmetallen und gelösten, suspendierten oder emulgierten organischen und/oder anorganischen Bestandteilen aus wäßrigen Systemen.

Schwer- und Buntmetalle finden als Bestandteile von Legierungen in Stählen und veredelnden oder korrosionshemmenden Auflagen in Verbindung mit Kunst- und Naturstoffen in allen Industriestaaten breite Anwendung. Die Technologien moderner industrieller Fertigung ergeben unter Verwendung von Metallen aus der Palette der Nebengruppenelemente und einiger Schwermetalle der dritten bis fünften Hauptgruppe des Periodensystems neben der nutzbringenden Anwendung zwangsläufig auch ein Abfallproblem.

Aus R. Bauer, J. Wehling: "Thioharnstoff als Fällungsmittel für Schwermetallsulfide" in Fresenius' Zeitschrift für Analytische Chemie, 199. Band Springer-Verlag Berlin, 1964, Seiten 171 bis 175 ist bereits bekannt, Metallionen mit Wasser, Thioharnstofflösung und Natronlauge zu behandeln.

Ferner ist aus der DE-24 37 779-A1 bereits ein Mittel und Verfahren zur Entfernung von Quecksilber und/oder Quecksilbersalzen aus Abwässern bekannt, das Thioharnstoff und/oder Hydroxylaminsalz enthält.

Aus der DE-26 08 153-A1 ist ferner ein Verfahren zum Aufbereiten Kupfer und Komplexbildner enthaltender Lösungen bekannt, bei dem ebenfalls Thioharnstoff eingesetzt wird.

Ferner ist aus der DE-22 42 473-A1 ein Behandlungsverfahren einer verbrauchten, stromlosen Bearbeitungs- oder Abbeizlösung bekannt, bei dem Natriumdithionit zugesetzt wird.

Aus der DE-21 22 415-A1 ist ferner ein Verfahren zum Entgiften, Klären und Wiedergewinnen von Metallsalzen aus Abwässern und Restkonzentraten durch Reduktion bis zu den Metallen mittels Hydrosulfit konz. (Natriumdithionit) oder Hydrazin bei gleichzeitiger Anwendung eines Impfstoffes und Sedimentationsbeschleunigers zur Verkürzung der Ausfällzeit und Reduzierung des Schlammvolumens bekannt, bei dem Natriumdithionit eingesetzt wird.

Aus der DE-38 22 922-A1 ist ferner ein Verfahren zur Abtrennung von Schwermetallen aus Abwässern sowie Fällungsmittel zur Durchführung dieses Verfahrens und Verfahren zur Herstellung des Fällungsmittels bekannt, bei dem Thiosulfate eingesetzt werden.

Ferner ist aus Chemical Abstracts, Vol. 93, 1980, Seite 306, Nr. 93: 119741c bereits die Fällung von Eisenzyanit aus Abwasser bekannt, bei der Natriumthiosulfat und Natriumdithionit u.a. eingesetzt. werden.

Aus der Pol. PL 125 519 in Chemical Abstracts, Vol. 101, 1984, Seite 276, Nr. 101: 59686k ist bereits ein Verfahren zur Entgiftung von Industrieabwässern bekannt, bei dem Na₂S₂O₄ verwendet wird.

Aus der JP 60-106585 (A) in Patents Abstracts of Japan, Seht G, 1985, Vol. 9, Nr. 254 [C-308] ist bereits ein Verfahren zur Entfernung von Schwermetallen bekannt, das Dithiocarbaminsäure u.a. verwendet.

Aus der JP 75-72 451 in Chemical Abstracts, Vol. 83, 1975, Seite 279, Nr. 83: 197 620 v ist bereits eine Behandlung von Abwasser bekannt, das u.a. Citronensäure enthält.

Aus der JP 75-72 867 in Chemical Abstracts, Vol. 84, 1976, Seite 281, Nr. 84: 35 077 s ist bereits eine Behandlung von Abwässern bekannt, die Thiocarbamid u.a. enthalten.

Aus der DE-23 06 249-A1 ist ferner ein Verfahren zur Abtrennung toxischer Metallionen aus Abwasser bekannt, das ein Xanthat verwendet.

Ferner ist aus der DE-22 55 175-A1 bereits ein Verfahren zur Verminderung des Dithiocarbamat-Gehaltes in Abwässern bekannt.

Aus der DE-23 12 233-B2 ist ferner ein Verfahren zum Entfernen von Schwermetallen aus Lösungen bekannt, das ein Polymer verwendet.

Aus der DE-23 32 705-A1 ist ferner ein Schwermetall-Bindemittel, Verfahren zu seiner Herstellung und seine Verwendung bekannt, das ein bestimmtes Harz enthält.

Schließlich ist aus der US-4,354,942-A ein Verfahren zur Stabilisierung von Quecksilber in quecksilberhaltigen Materialien bekannt, das eine anorganische Schwefelverbindung bestimmter Art verwendet.

Nach vorsichtiger Einschätzung fallen rund 5% der erzeugten oder eingesetzten metallischen Elemente in Produktions- oder Verarbeitungsprozessen wieder als Rest- bzw. als Abfallstoffe in reiner Form oder in Verbindungen an, die nach den bisher bekannten Methoden z.T. nicht wirtschaftlich einer Wiederverwertung zugeführt werden können. Neben den volkswirtschaftlichen Aspekten, die eine kostengünstige technologische Rückgewinnung und damit eine Verminderung des Kosten- und Devisenbedarfs für die Beschaffung von Rohstoffen, sowie eine derartige Streckung der Rohstoffressourcen wünschenswert erscheinen lassen, sind die umweltrelevanten Gesichtspunkte der Sondermüllverringerung der überwiegend für fast alle biologischen Spezies toxisch wirkenden Schwer- und Buntmetalle von Bedeutung.

Die Entfernung toxischer Schwer- und Buntmetalle aus Abwässern der metallverarbeitenden Industrie wird heute noch in erheblichem Ausmaß durch die klassische hydroxidische Fällung mit Natronlauge, Kalkmilch oder, in Sonderfällen, mit Natriumcarbonat vorgenommen. Aufgrund des weiten pH-Bereichs, in dem die Hydroxide und Oxyhydrate fallen, und aufgrund von Mischreaktionen, z.B. verschiedener zweiwertiger Metalle mit ähnlichen Ionenradien, muß hier jedoch in Vorversuchen für jede Metallionenmischung empirisch der optimale "Kompromiß"-pH-Wert ermittelt werden. Ferner können exakte reproduzierbare Voraussagen über den Fällungsprozeß nicht gemacht werden, da eine Vielzahl von Faktoren den Vorgang der Ausfällung beeinflußt und überlagert. Die hydroxidische Fällung von Schwer- und Buntmetallen weist prinzipiell vier weitere wesentliche Nachteile auf:
1. Die Löslichkeitsprodukte der Metallhydroxide sind um mindestens 7 bis 10 Zehnerpotenzen größer als die der entsprechenden Sulfide. Die Löslichkeit der Metallhydroxide ist also überschlägig, je nach Matrixverhältnissen der Lösungen, bis zum Wert des zehnmillionenfachen höher, als die der adäquaten Sulfide.
2. Der Neutralsalzeinfluß im Fällungsmedium, der zur Erhöhung der Löslichkeit führt, wirkt sich bei der hydroxidischen Fällung wesentlich stärker aus als bei der sulfidischen Fällung. Außerdem ist oft ein negativer Einfluß auf das Sedimentationsverhalten und die Filtrierbarkeit der Niederschläge zu beobachten.
3. Die hydroxidische Fällung einiger Schwer- und Buntmetalle ist bei Anwesenheit von Komplexbildnern gar nicht oder nur in unbefriedigendem Maße möglich.
4. Die nach dieser klassischen Methode ausgefällten Metallhydroxide sind nur unter Anwendung erschwerter und kostenaufwendiger Methoden wieder ververtbar. Daher werden in der Regel bis heute hydroxidische Schlämme aus der metallverarbeitenden Industrie unter hohen Kosten als Sonderabfall entsorgt.

Demgegenüber liegen die Löslichkeitsprodukte der meisten Metallsulfide so niedrig, daß die quantitative Fällung der Metallionen selbst aus stark komplexhaltigen Lösungen erfolgt. Dennoch wird die Sulfidfällung im Abwasserbereich nur selten praktiziert. Einmal ist die Anwendung des unangenehm riechenden, giftigen und brennbaren Schwefelwasserstoffs nicht unproblematisch und zum anderen weisen die meisten Metallsulfide eine unbefriedigende Abtrennbarkeit aus der wäßrigen Phase auf.

In der Praxis der Abwasserreinigung wurden in den letzten Jahren für Spezialgebiete verschiedene Organosulfide eingeführt. Die Organosulfide arbeiten nach dem gleichen Prinzip wie die Sulfide und fällen u.a. Kupfer, Cadmium, Quecksilber, Blei, Nickel, Zinn und Zink als Sulfide aus. Ihr Nachteil liegt allerdings darin, daß der zulässige pH-Wert auf Werte von über 7 beschränkt ist, da es im sauren Bereich zur Ausfällung der unwirksamen freien Säure kommt.

Nun sind aber gerade die Stabiltätskonstanten vieler Schwermetallkomplexe, speziell vom Typ der häufig verwendeten Polyaminocarbonsäuren, stark abhängig vom pH-Wert, und zwar so, daß bei höheren pH-Werten eine größere Stabilität gegeben ist als im sauren Bereich. Die Ausfällung komplexierter Metalle ist dann nur über ein kompliziertes Verfahren mittels Umkomplexierung durch Eisen-III-Ionen möglich.

Es können zwar bei vollständiger Abwesenheit von komplexierenden Stoffen und bei strikter Einhaltung der optimalen Betriebsbedingungen die neuen Grenzwerte der 40. Allgemeinen Verwaltungsvorschrift über Mindestanforderungen über das Einleiten von Abwasser in Gewässer gemäß § 7a Wasserhaushaltsgesetz (WHG) mit der hydroxidischen Fällung gerade noch unterschritten werden, wenn zusätzlich eine Filtration des behandelten Abwassers nachträglich vorgenommen wird. Eine solche Betriebsweise ist technisch jedoch sehr aufwendig und bietet keine Garantie für eine ständige Einhaltung der gesetzlichen Vorgaben, weil der Sicherheitsabstand der erreichbaren Werte zu den Grenzwerten mit einem Faktor von ca. 1,5 - 2 zu gering ist. Bereits kleinste Betriebsstörungen führen in solchen Fällen zur Überschreitung der zulässigen Werte.

Bei der Schwer- und Buntmetallfällung mit Polysulfiden werden an Stelle des giftigen Schwefelwasserstoffs Alkali- oder Erdalkalipolysulfide eingesetzt. Der Nachteil bisher bekannter polysulfidischer Fällungsmittel liegt jedoch darin, daß diese in Wasser eine schlechte Löslichkeit aufweisen und daher zu einer Erhöhung des Stoffbedarfs und des apparativen Aufwands führen.

Ferner haben herkömmliche Fällmittel den Nachteil, daß sie vorwiegend auf den sauren pH-Bereich beschränkt sind. Eine Fällung von Schwermetallionen aus stark sauren Medien und aus stark alkalischen Medien mit demselben Fällmittel ist bislang nicht gelungen.

Es ist daher Aufgabe der vorliegenden Erfindung, eine Zusammensetzung zur Behandlung von mit Metallionen verschmutztem Wasser anzugeben, die über den gesamten Bereich von pH 0 bis 14 mit befriedigendem Ergebnis arbeitet.

Diese Aufgabe wird erfindungsgemäß gelöst durch eine Zusammensetzung gemäß Anspruch 1.

Die bei der Reaktion dieser Substanzen gebildete Verbindung, bzw. das gebildete Gemisch von Schwefelverbindungen ist hinsichtlich seiner Struktur und chemischen Formel noch nicht geklärt.

Die Zusammensetzung ist zur Fällung von Schwermetallen aus sauren Medien (ab pH 0,5) bis hin zu stark alkalischen Medien (pH 14,0, 10-molare Natron- bzw. Kalilauge) geeignet. Die Schwermetalle werden als Metallsulfide ausgefällt. Die erfindungsgemäße Zusammensetzung ist insbesondere geeignet zur Ausfällung im neutralen bis stark alkalischen pH-Bereich von Metallen, die sonst bevorzugt im saueren pH-Bereich gefällt werden. So werden Quecksilbersulfid, Cadmiumsulfid, Bleisulfid und Nickelsulfid noch bei pH 12 in quantitativen Mengen aus wäßrigen Lösungen ausgefällt. Nickel- und Cadmiumionen lassen sich auch aus konzentrierten Natron- und Kalilaugen (10-molar) in Form ihrer Sulfide fällen. Die Fällung von Kupferionen ist bis zum pH-Wert von 10,0 gut möglich. Gleichzeitig läßt sich auch Zink gut fällen. Die erfindungsgemäße Zusammensetzung ist ferner geeignet für eine Stabilisierung der Chrom-III-Hydroxidfällung bis deutlich unter den Grenzwert von 0,5 mg/l. Aufgrund seiner Fällungeigenschaften ist die Zusammensetzung daher sehr gut zur simultanen sulfidischen Nachfällung im neutralen und schwachalkalischen Bereich nach einer vorhergehenden hydroxidischen Hauptfällung geeignet.

Mit der erfindungsgemäßen Zusammensetzung können mühelos Werte bis zu 1/10 der neuen Grenzwerte erreicht werden, was einen Sicherheitsabstandsfaktor von 10 bedeutet. Auch kleinere Betriebsstörungen der Behandlungsanlagen führen dann zu keiner Grenzwertüberschreitung.

Kaliumhydroxid und Natriumhydroxid sind leicht und zu geringen Kosten erhältlich, so daß sich der Preis der Zusammensetzung niedrig halten läßt.

Kaliumdithionit und Natriumdithionit sind ebenfalls im Handel leicht und zu einem vertretbaren Preis erhältlich.

In einer weiterhin bevorzugten Ausführungsform werden Natriumhydroxid, Thioharnstoff und Natriumdithionit zur Umsetzung in ein Gewichtsverhältnis von 1:2:1 gebracht. Mit diesem Verhältnis entsteht eine Zusammensetzung, die insbesondere zur Fällung von Quecksilber und Blei im neutralen pH-Bereich (pH 6 bis 9,5) aber auch zur Fällung von Cadmium, Nickel und Zink im neutralen bis stark alkalischen Bereich geeignet ist. Quecksilberionen spielen insbesondere eine Rolle im Abwasser von Kraftwerken und Müllverbrennungsanlagen, wo sie bei der Entschwefelung von Rauchgasen in das Wasser gelangen. Sie können ohne Rücksäuerung mit der erfindungsgemäßen Zusammensetzung auch noch im alkalischen Bereich gefällt werden. Bei der Rauchgasentschwefelung ist der Zusatz der Zusammensetzung vor der Sprühtrocknungsphase besonders bevorzugt.

In einer ferner bevorzugten Ausführungsform enthält die Zusammensetzung ein Alkalisulfit und/oder -hydrogensulfit und/oder -disulfit. Die Sulfite, insbesondere das Disulfit dienen zur Herstellung eines reduzierenden Milieus in der Lösung zur langzeitigen Stabilisierung der Thioschwefelkomponenten. Ein Disulfit ist bei der technischen Anwendung leichter und gefahrloser handhabbar als ein Sulfit, z.B. Natriumsulfit, da es im trockenen Zustand kein Schwefeldioxid freisetzt. In der Anwendung bewirkt die Sulfitkomponente eine sofortige Bindung des Restsauerstoffs im Behandlungsmedium, wodurch eine Verminderung der Fällwirkung von Thioverbindungen bei der Schwermetallfällung vermieden wird.

Ferner ist bevorzugt, daß die Zusammensetzung Natriumdiethyldithiocarbamat (C₅H₁₀NNaS₂.3H₂O) enthält. Diese Substanz dient als Flockungsbeschleuniger, hat also die Aufgabe, bei Ausfällungen insbesondere im stark alkalischen Bereich eine schnellere Zusammenballung fein dispersiver Niederschläge zu bewirken.

Ferner ist es bevorzugt, ein Xanthogenat bei der Umsetzung zu verwenden. Das Xanthogenat wirkt ähnlich wie das Natriumdiethyldithiocarbamat als Flockungsbechleuniger und bewirkt sowohl eine bessere Konglomerierung der ausgefällten Metallsulfide sowie eine Stabilisierung der Fällwirkung.

Bevorzugt ist eine Umsetzung von Natriumhydroxid, Thioharnstoff, Natriumdithionit, Natriumdisulfit und Natriumdiethyldithiocarbamat bzw. Xantogenat in dem Gewichtsverhältnis 50:100:50:20:2. Mit einem solchen Gemisch ist insbesondere die Fällung von Quecksilber und Blei im neutralen pH-Bereich (pH 6 bis 9,5) aber auch die Fällung von Cadmium, Nickel und Zink im neutralen bis stark alkalischen Bereich verstärkt.

Die erfindungsgemäße Zusammensetzung wird hergestellt durch ein Verfahren nach Anspruch 8.

Das erfindungsgemäße Gemisch reagiert unter Abspaltung von Ammoniak zu einer schwachgelblichen, trüben Lösung, wobei im Verlaufe von 48 Std. nach Anmischung ein grünlich-schwarzer Niederschlag von geringer Menge und feinkörniger Konsistenz ausfällt. Die klare überstehende Lösung wird vom Niederschlag getrennt und stellt die fertige Zusammensetzung dar. Das Verfahren hat den Vorteil, daß es im Gegensatz zu polysulfidisch-polysulfanischen Fällmitteln keinen giftigen Schwefelwasserstoff freisetzt.

Bevorzugt ist der Zusatz des Natriumdisulfits vor der Zugabe des Natriumdithionits, um den Thioharnstoff, noch vor seiner Reaktion mit dem Dithionit zu stabilisieren. Das Natriumdiethyldithiocarbamat kann hingegen zuletzt zugesetzt werden, weil es lediglich eine Beschleunigung der Ausflockung bewirken soll. Ähnlich wie das Natriumdiethyldithiocarbamat kann auch das Xanthogenat gegen Ende der Reaktion zugesetzt werden, um eine Beschleunigung der Ausflockung zu bewirken. Beide Substanzen, d.h. sowohl Natriumdiethyldithiocarbamat als auch das Xanthogenat können jedoch auch schon zu Beginn, d.h. ca. 1 Std. nach Anmischung zugesetzt werden. Es ist noch nicht abschließend geklärt, ob sie auch bei der Reaktion der erfindungsgemäßen Zusammensetzung eine Rolle spielen. Das Xanthogenat hat möglicherweise eine katalytische Wirkung.

Die bisher bekannten Wirkungen beziehen sich schwerpunktmäßig auf die Metalle Quecksilber, Cadmium, Blei, Nickel und Zink. Diese stellen die in der Praxis am häufigsten auftretenden Schwermetallverunreinigungen dar. Die erfindungsgemäße Zusammensetzung ist als Fällmittel aber nicht auf diese Metalle beschränkt.

Bei der Verwendung der erfindungsgemäßen Zusammensetzung lassen sich klar definierte Einsatzmengen der erfindungsgemäßen Zusammensetzung pro Abwasservolumen nicht festlegen, da in der Regel die Matrixeffekte des Abwassers derart stark variieren, daß ein Anwendungsoptimum auf empirischem Wege ermittelt werden muß. Zu diesen Matrixeffekten zählen Neutralsalzgehalte, Tensidzusätze, Schlichtungsmittel und beispielsweise auch Mineralölgehalte.

Es wurde jedoch festgestellt, daß bei Schwermetallgehalten zwischen 5 und 50 mg/l in der Anwendung der rein sulfidischen Fällung ein Zusammensetzung/Abwasser-Verhältnis von 1/5000 (0,2 kg/m³) zur vollständigen Ausfällung führt.

Bei der erwähnten hydroxidischen, sulfidischen Nachfällung reicht hingegen ein Zusammensetzung/Abwasser-Verhältnis zwischen 1/10000 und 1/50000. Auch hier ist jedoch auf empirischem Wege in Abhängigkeit von dem zu behandelnden Abwasser ein Einsatzvolumen für eine optimale Fällwirkung zu ermitteln.

Im folgenden wird die Herstellung von 1 m³ erfindungsgemäßer Zusammensetzung an einem Beispiel erläutert.

### Herstellungsbeispiel:

Zur großtechnischen Herstellung der erfindungsgemäßen Zusammensetzung sind Kessel aus Edelstahl, vornehmlich aus V-4A mit Rühreinrichtungen ( 100 min⁻¹) erforderlich. Das zum Ansatz verwendete Wasser muß voll entsalzt sein, z.B. hergestellt über gemischte Anion- und Kationharztauscher.

Zur Herstellung von 1 m³ erfindungsgemäßer Zusammensetzung werden in einem Behälter von 1,5 m³ Volumen mit Rühreinrichtung 400 l entsalztes Wasser eingefüllt und danach 50 kg Ätznatron fest, chemisch rein, in Schuppen- oder Perlenform unter Rühren zugegeben.

Nach vollständiger Auflösung werden 100 kg Thioharnstoff, chemisch rein, ca. 99%ig, und danach weitere 300 l entsalztes Wasser zugegeben.

Nach weitgehender Auflösung des Thioharnstoffes (Lösung wird trüb), werden zunächst 20 kg Natriumdisulfit, chemisch rein, zugegeben.

Nach einer Rührzeit von ca. 10 min. werden weitere 197 l Wasser zugegeben und anschließend 50 kg Natriumdithionit zugegeben. Nach einer weiteren Rührzeit von 30 min werden 2 kg Natriumdiethyldithiocarbamat in Form eines flüssigen 25%igen technischen Produktes (Percazit SDEC), d.h. 8 kg industrielles Flüssigprodukt zugegeben. Schließlich wird nach einer weiteren kurzen Rührzeit 2 kg eines Xanthogenats zugegeben.

Das fertige Gemisch wird ca. 4 Std. gerührt. Anschließend bleibt die Lösung weitere 44 Std. ohne Rühren zur Reaktion stehen. Die erfindungsgemäße Zusammensetzung ist somit insgesamt 48 Std. nach Anmischung gebrauchsfertig. Der ausgefällte Niederschlag wird abschließend von der klaren überstehenden Flüssigkeit getrennt, welche das Fällmittel darstellt.

Die physikalischen und physikalisch/chemischen Kenndaten des Produktes sind wie folgt:
Form: Flüssigkeit; Farbe: klar, schwach gelb; Geruch: ammoniaklisch faulich;
Dichte bei 20°C: 1,125g/cm³; Dampfdruck bei 20°C: 20,8 mbar;
Viskosität bei 20°C, nach DIN 51562: 1,50 mm²/s = 1,69 mP
Siedepunkt bei 1013 mbar: 103,1°C; Kristallisationspunkt: - 5,5°C; pH-Wert: 13,25;

## Patentansprüche

1. Zusammensetzung zum Behandeln von mit Metallionen verunreinigtem Wasser,
erhältlich durch
- Umsetzung von Kalium- oder Natriumhydroxid in voll entsalzter wäßriger Lösung mit Thioharnstoff und Kalium- oder Natriumdithionit, und
- Abtrennung der nach der Umsetzung überstehenden Flüssigkeit, welche die Zusammensetzung darstellt.

2. Zusammensetzung nach Anspruch 1,
**dadurch gekennzeichnet,**
daß Natriumhydroxid, Thioharnstoff und Natriumdithionit zur Umsetzung im Gewichtsverhältnis 1:2:1 stehen.

3. Zusammensetzung nach Anspruch 1 oder 2,
**dadurch gekennzeichnet,**
daß sie ein Alkalisulfit und/oder -hydrogensulfit und/oder -disulfit enthält.

4. Zusammensetzung nach Anspruch 3,
**dadurch gekennzeichnet,**
daß sie Natriumdisulfit enthält.

5. Zusammensetzung nach einem der Ansprüche 1 bis 4,
**dadurch gekennzeichnet,**
daß bei der Umsetzung Natriumdiethyldithiocarbamat eingesetzt wird.

6. Zusammensetzung nach einem der Ansprüche 1 bis 5,
**dadurch gekennzeichnet,**
daß bei der Umsetzung ein Xanthogenat eingesetzt wird.

7. Zusammensetzung nach einem der Ansprüche 1 bis 6
**dadurch gekennzeichnet,**
daß Natriumhydroxid, Thioharnstoff, Natriumdithionit, Natriumdisulfit und Natriumdiethyldithiocarbamat bzw. Xanthogenat zur Umsetzung im Gewichtsverhältnis 50:100:50:20:2 stehen.

8. Verfahren zur Herstellung einer Zusammensetzung nach einem der Ansprüche 1 bis 7,
**dadurch gekennzeichnet,**
daß man einem Kalium- oder Natriumhydroxid in wäßriger Lösung, Thioharnstoff und Kalium- oder Natriumdithionit zusetzt, die Lösung rührt, das Ende der Reaktion abwartet und die klare überstehende Flüssigkeit abtrennt.

9. Verfahren nach Anspruch 8,
**dadurch gekennzeichnet,**
daß man dem wäßrigen Natriumhydroxid nacheinander unter Rühren Thioharnstoff, Natriumdisulfit, Natriumdithionit und schließlich Natriumdiethyldithiocarbamat bzw. das Xantogenat zusetzt, das Ende der Reaktion abwartet, und die klare überstehende Flüssigkeit abtrennt.

10. Verwendung einer Zusammensetzung gemäß den Ansprüchen 1 bis 7 zum Behandeln von mit Metallionen verunreinigtem Wasser.

## Claims

1. Composition for treating water contaminated with metal ions,
obtainable by
reaction of potassium or sodium hydroxide in completely desalted aqueous solution with thiourea or sodium dithionite, and
separation of the liquid supernatant after the reaction which represents the composition.

2. Composition according to claim 1,
characterized in
that sodium hydroxide, thiourea and sodium dithionite are for the reaction in the ratio of weight 1:2:1.

3. Composition according to claim 1 or 2,
characterized in
that it contains an alkali-sulphite and/or an alkali-hydrogen sulphite and/or an alkali-disulphite.

4. Composition according to claim 3,
characterized in
that it contains sodium sulphite.

5. Composition according to one of the claims 1 to 4,
characterized in
that sodium diethylene dithiocarbamate is used in the reaction.

6. Composition according to one of the claims 1 to 5,
characterized in
that a xanthogenate is used in the reaction.

7. Composition according to one of the claims 1 to 6,
characterized in
that sodium hydroxide, thiourea, sodium dithionite, sodium disulphite and sodium dithylene dithiocarbamate respectively xanthogenate are for the reaction in the ratio of weight 50:100:50:20:2.

8. Process of production of a composition according to the claims 1 to 7,
characterized in
that thiourea and potassium or sodium dithionite are added to a potassium or sodium hydroxide in aqueous solution, the solution is agitated, the end of the reaction is awaited and the clear remaining liquid is seperated.

9. Process according to claim 8,
charcterized in
that thiourea, sodium disulphite, sodium dithionite and finally sodium diehtylene dithiocarbamate respectively the xanthogenate are successively added by agitating to the aqueous sodium hydroxide, the end of the reaction is awaited and the clear remaining liquid is seperated.

10. Application of a composition according to the claims 1 to 7 for treatment of water contaminated with metal ions.

## Revendications

1. Composition pour le traitement des eaux contaminées avec des ions de métal,
à obtenir par
réaction de hydroxide de potassium ou de sodium en solution aqueuse complètement dessalée avec thiourée et dithionite de potassium ou de sodium et
séparation du liquide restant après la réaction, lequel représente la composition.

2. Composition selon revendication 1,
caractérisée en ce que
hydroxide de sodium, thiourée et dithionite de sodium se trouvent dans le rapport du poids 1:2:1 pour la réaction.

3. Composition selon revendication 1 ou 2,
caractérisée en ce qu'elle contient un sulfite alcalin et/ou un sulfite d'hydrogène alcalin et/ou un disulfite alcalin.

4. Composition selon revendication 3,
caractérisée en ce qu'elle contient disulfite de sodium.

5. Composition selon une des revendications 1 à 4,
caractérisée en ce que diéthyldithiocarbamate de sodium est utilisé dans la réaction.

6. Composition selon une des revendications 1 à 5,
caractérisée en ce qu'un xanthogénate est utilisé dans la réaction.

7. Composition selon une des revendications 1 à 6,
caractérisée en ce que hydroxide de sodium, thiourée, dithionite de sodium, disulfite de sodium et diéthyldithiocarbamate de sodium respectivement xanthogénate se trouvent dans le rapport du poids 50:100:50:20:2 pour la réaction.

8. Procédé de production d'une composition selon une des revendications 1 à 7,
caractérisé en ce qu'on additionne thiourée et dithionite de potassium ou de sodium à un hydroxide de potassium ou de sodium en solution aqueuse, qu'on agite la solution, qu'on attend la fin de la réaction et qu'on sépare le liquide claire restant.

9. Procédé selon revendication 8,
caractérisé en ce qu'on additionne successivement en agitant thiourée, disulfite de sodium, dithionite de sodium et finalement diéthyldithiocarbamate de sodium respectivement le xanthogénate à l'hydroxide de sodium aqueux, qu'on attend la fin de la réaction et qu'on sépare le liquide claire restant.

10. Utilisation d'une composition selon les revendications 1 à 7 pour le traitement des eaux contaminées avec des ions de métal.
